# EUROPEAN PATENT APPLICATION

(11) **EP 4 574 240 A1**
(43) Date of publication of application: **25.06.2025**
(21) Application number: 23307346.9
(22) Date of filing: 22.12.2023
(51) Int. Cl.: B01D 53/047, B01D 53/14, B01D 53/22, C01B 32/05, C01B 3/38, C01B 3/48, C01B 3/50

(54) **INTEGRATING ENHANCED WATER-GAS SHIFT IN SYSTEM FOR LOW CARBON HYDROGEN PRODUCTION**

(71) Applicant: Technip Energies France, 92741 Nanterre Cedex (FR)
(72) Inventor: WANDERS, Mark, 92741 Nanterre Cedex (FR); WALSPURGER, Stephané, 92741 Nanterre Cedex (FR); JAIN, Prateek, 92741 Nanterre Cedex (FR); ELSEVIERS, Wim, 92741 Nanterre Cedex (FR)
(74) Representative: Edson, Russell Gregory

(57) **Abstract**

A system can include a reforming reactor, a water-gas shift (WGS) reactor, a sub-system to increase the partial pressure of carbon monoxide and carbon dioxide, and a sorption enhanced water-gas shift (SEWGS) reactor. The reforming reactor may react a hydrocarbon feed to produce a reformer effluent that includes carbon monoxide and hydrogen. The WGS reactor may receive the reformer effluent and to convert at least a portion of the carbon monoxide to carbon dioxide and hydrogen and produce a shift effluent. The sub-system may increase the partial pressure of carbon monoxide and carbon dioxide in the shift effluent. The SEWGS reactor may receive the shift effluent with the increased partial pressure of carbon monoxide and carbon dioxide and to provide a carbon-dioxide-rich product stream and a hydrogen-rich product stream.

## Description

### Technical Field

The present disclosure relates generally to chemical processing and, more particularly (although not necessarily exclusively), to a system that integrates a sorption enhanced water-gas shift reactor that can be used to produce low-carbon hydrogen.

### Background

Hydrogen can be a useful fuel source for modern times. For example, hydrogen may be a low emission fuel source or may be a zero-emission fuel source. Additionally, hydrogen can be used to process or generate hydrocarbon fuels or sources into usable fuel sources or other usable materials, such as olefins. In some examples, hydrogen production can involve carbon-based materials. For example, carbon dioxide may be generated along with hydrogen, carbon-based materials may be included in inputs to a system for generating hydrogen, and the like. The carbon-based materials may have low partial pressures, which may introduce difficulties in generating pure streams of hydrogen.

### Summary

Example No. 1 is a system that includes a reforming reactor coupled with a hydrocarbon feed source to receive a hydrocarbon feed and to react the hydrocarbon feed to produce a reformer effluent that includes carbon monoxide and hydrogen. The system also includes a water-gas shift (WGS) reactor coupled with the reforming reactor to receive the reformer effluent. At least a portion of the carbon monoxide is convertible by the WGS reactor to carbon dioxide and hydrogen and to produce a shift effluent. The system also includes a sub-system coupled with the WGS reactor to receive the shift effluent and to increase a partial pressure of carbon monoxide and carbon dioxide in the shift effluent. The system also includes a sorption enhanced water-gas shift (SEWGS) reactor coupled with the sub-system to receive the shift effluent with increased partial pressure of carbon monoxide and carbon dioxide, and to provide, via a SEWGS reaction, a carbon-dioxide-rich product stream and a hydrogen-rich product stream.

Example No. 2 is the Example No. 1 and further comprising a heat recovery device coupled with the SEWGS reactor to recover heat from the carbon-dioxide-rich product stream or the hydrogen-rich product stream.

Example No. 3 is the Example No. 1 or No. 2, wherein the sub-system comprises a hydrogen selective membrane, a hydrogen pressure swing adsorption (PSA) device, a heat exchanger, or any combination thereof.

Example No. 4 is the Examples of any of the preceding paragraphs in this Summary, wherein the sub-system comprises a first hydrogen selective membrane to receive the shift effluent, wherein a first hydrogen-enriched stream and an adjusted shift effluent with the increased partial pressure of carbon monoxide and carbon dioxide is producible by the first hydrogen selective membrane, and wherein the system further comprises a first recycle device to recycle the first hydrogen-enriched stream in the reforming reactor as fuel.

Example No. 5 is the Examples of any of the preceding paragraphs in this Summary, wherein the sub-system is a condensing heat exchanger to receive the shift effluent, wherein (i) a cooled shift effluent with an increased partial pressure of carbon monoxide and carbon dioxide and (ii) a steam-condensate are producible by the heat exchanger, and wherein the system further comprises a condensate removal device to remove condensate for the shift effluent and to provide a dried shift effluent.

Example No. 6 is the Example No. 5, wherein the sub-system is a first hydrogen PSA device to receive the dried shift effluent, wherein a first hydrogen enriched stream and a PSA tail gas are producible by the first hydrogen PSA device, and wherein the system further comprises a PSA tail gas compressor coupled with the first hydrogen PSA device to compress the PSA tail gas.

Example No. 7 is the Example No. 5, further comprising a second recycle device to recycle the dried shift effluent in the heat exchanger.

Example No. 8 is the Example No. 5, further comprising: a second hydrogen selective membrane coupled with the condensate removal device to receive the dried shift effluent, wherein a second hydrogen-enriched stream and a retentate stream are producible by the second hydrogen selective membrane; and a third recycle device coupled with the second hydrogen selective membrane to recycle the second hydrogen-enriched stream in the reforming reactor as fuel and the retentate stream in the heat exchanger.

Example No. 9 is the Example No. 5, further comprising: a hydrogen separation unit coupled with the condensate removal device to receive the dried shift effluent, wherein a third hydrogen-enriched stream and a purge stream are producible by the hydrogen separation unit; a compression device to compress the purge stream; and a fourth recycle device to recycle the compressed purge stream in the heat exchanger.

Example No. 10 is a method that includes:
reforming a hydrocarbon feed with an oxidant gas stream to produce a reformer effluent that includes carbon monoxide and hydrogen, the reforming using a reforming reactor of a hydrogen production system;
converting the carbon monoxide to carbon dioxide and hydrogen in a water-gas shift reactor to produce a shift effluent, the converting using a water-gas shift (WGS) reactor of the hydrogen production system;
increasing a partial pressure of carbon monoxide and carbon dioxide in the shift effluent; and
generating a carbon-dioxide-rich product stream and a hydrogen-rich product stream, the generating using a sorption enhanced water-gas shift (SEWGS) reactor of the hydrogen production system and using the shift effluent.

Example No. 11 is the Example No. 10, further comprising recovering heat from the carbon-dioxide-rich product stream or the hydrogen-rich product stream.

Example No. 12 is Examples Nos. 10 or 11, wherein increasing the partial pressure of carbon monoxide and carbon dioxide comprises using a hydrogen membrane or a heat exchanger to increase the partial pressure of carbon monoxide and carbon dioxide.

Example No. 13 is Example No. 12, wherein increasing the partial pressure of carbon monoxide and carbon dioxide comprises separating hydrogen from the shift effluent using a hydrogen membrane to produce (i) a first hydrogen-enriched stream and (ii) a shift effluent with an increased partial pressure of carbon monoxide and carbon dioxide, wherein the method further comprises recycling the first hydrogen-enriched stream in a reforming reactor as fuel or in a downstream pre-heating section.

Example No. 14 is Example No. 12, wherein increasing the partial pressure of carbon monoxide and carbon dioxide comprises cooling and condensing the shift effluent to produce (i) a cooled shift effluent with an increased partial pressure of carbon monoxide and carbon dioxide and (ii) a steam condensate, and wherein the method further comprises condensing steam included in the steam-enriched shift effluent to produce a dried shift effluent.

Example No. 15 is Example No. 14, further comprising recycling the dried shift effluent in the heat exchanger.

Example No. 16 is any of Examples Nos. 10 to 15, further comprising desulfurizing the hydrocarbon feed.

Example No. 17 is a system that includes a desulfurization device coupled with a hydrocarbon feed source to receive a hydrocarbon feed, sulfur removable from the hydrocarbon feed using the desulfurization device. The system also includes a reforming reactor coupled with the desulfurization device to receive the hydrocarbon feed from the desulfurization device and to react the hydrocarbon feed to produce a reformer effluent that includes carbon monoxide and hydrogen. The system also includes a water-gas shift (WGS) reactor coupled with the reforming reactor to receive the reformer effluent, at least a portion of the carbon monoxide convertible to carbon dioxide and hydrogen to produce a shift effluent. The system also includes a sub-system coupled with the WGS reactor to increase a partial pressure of carbon monoxide and carbon dioxide in the shift effluent. The system also includes a sorption enhanced water-gas shift (SEWGS) reactor coupled with the sub-system to receive the shift effluent with increased partial pressure of carbon monoxide and carbon dioxide, a carbon-dioxide-rich product stream and a hydrogen-rich product stream producible by the SEWGS reactor via a SEWGS reaction.

Example No. 18 is Example No. 17, further comprising a heat recovery device coupled with the SEWGS reactor to recover heat from the carbon-dioxide-rich product stream or the hydrogen-rich product stream.

Example No. 19 is Example No. 17, wherein the sub-system comprises a hydrogen selective membrane, a hydrogen pressure swing adsorption (PSA) device, a heat exchanger, or any combination thereof.

Example No. 20 is Example No. 17, wherein the sub-system comprises a first hydrogen selective membrane coupled with the WGS reactor to receive the shift effluent, wherein a first hydrogen-enriched stream and a shift effluent with the increased partial pressure of carbon monoxide and carbon dioxide are producible by the first hydrogen selective membrane, and wherein the system further comprises a first recycle device to recycle the first hydrogen-enriched stream in the reforming reactor as fuel.

### Brief Description of the Drawings

FIG. 1 is a block diagram of a hydrogen production system that can be used to (partially) remove hydrogen upstream from a sorption enhanced water-gas shift reactor according to some examples of the present disclosure.
FIG. 2 is a block diagram of a hydrogen production system that can be used to remove condensate and recover heat upstream from a sorption enhanced water-gas shift (SEWGS) reactor according to some examples of the present disclosure.
FIG. 3 is a block diagram of a hydrogen production system that can be used to (partially) remove hydrogen, condensate and recover heat upstream from a SEWGS reactor according to some examples of the present disclosure.
FIG. 4 is a block diagram of a hydrogen production system that can include a SEWGS system downstream from a pressure swing adsorption (PSA) unit according to some examples of the present disclosure.

### Detailed Description

Certain aspects and features of the present disclosure relate to integrating a sorption enhanced water-gas shift reactor into a hydrogen production system to facilitate hydrogen production with low levels of carbon. The hydrogen production system can use reverse water-gas shift (rWGS) reactions, reformation reactions, or the like to generate hydrogen gas, synthesis gas (syngas), carbon dioxide, and the like. The sorption enhanced water-gas shift reactor can produce hydrogen-rich gas while removing, such as via adsorption or other suitable processes, carbon-dioxide-containing gas. A sorption enhanced water-gas shift system can be integrated into the hydrogen production system downstream from one or more reactors that may facilitate one or more reactions such as water-gas shift, reformation, or the like. The sorption enhanced water-gas shift system can facilitate production of pure hydrogen with small amounts of carbon-based material. For example, the hydrogen production system can transmit feedstock to the sorption enhanced water-gas shift system, and the feedstock can include an increased partial pressure of carbon-based material and a decreased partial pressure of hydrogen, compared to other hydrogen production systems, to facilitate an enhanced rate of adsorption of the carbon-based material.

Hydrogen may be a component for producing clean transportation fuels, for refineries, or the like, and hydrogen may be a building block of synthesis gas (syngas) that can be used in the chemical industry. Hydrogen may also be a carbon-free fuel. Hydrogen can be produced from hydrocarbon material by partial oxidation, reforming reactions, or the like. Independent from the generation process, the hydrocarbon conversion to syngas can be carried out at high temperatures, such as between approximately 800 °C to approximately 1200 °C, and at high pressures, such as above five bar, above ten bar, above 15 bar, or the like. Due to the high reaction temperatures, heat recovery can be used in the design of a hydrogen plant or hydrogen system, and heat recovery can determine an overall efficiency of the system as well as the carbon dioxide emissions related to hydrogen production. The application of carbon dioxide capture to the hydrogen generation plant can benefit from available residual or waste heat of the hydrogen generation process. Separation or isolation of carbon dioxide product or capture can recover energy that is used in the capture process, either in the form of thermal heat when regenerating solvent used for selective carbon dioxide absorption or in the form of electrical power when the carbon-dioxide-rich stream is compressed before the separation and downstream from the capture process.

The terms "reforming" and "methane reforming" can denote a reforming reaction according to one or more of the following reactions:
- 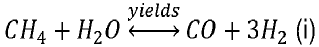
- 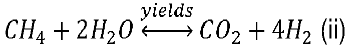
-

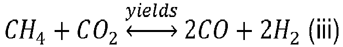

Reactions (i) and (ii) can be or include steam methane reforming reactions, while reaction (iii) may be or include a dry methane reforming reaction. For higher hydrocarbons, such as *CₙHₘ* where *n* ≥ 2 and m ≥ 4, reaction (i) can be generalized as: 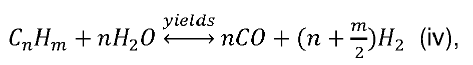 , where ≥ 2 and *m* ≥ 4. In some examples, reforming can be accompanied by the water-gas shift reaction 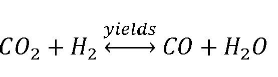 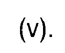 . Additionally or alternatively, the term "steam methane reforming" may refer to reactions (i) and (ii) running from left-to-right, which may indicate a conversion of methane, while the term "methanation" may refer to reactions (i) or (iv) running from right-to-left, which may indicate formation of methane. Additionally or alternatively, the term "steam methane reforming/methanation reactions" may refer to reactions (i) and (iv) running towards equilibrium. The term "reverse water-gas shift" may refer to reaction (v) running, for example, from right-to-left. In some examples, the reactions may be approximately at, or close to, equilibrium at an outlet from a catalyst bed or a catalyst zone of a corresponding reactor.

Processes based on autothermal reforming (ATR) can be or include an alternative route to producing synthesis gas (syngas), especially when a low ratio of hydrogen to carbon monoxide is used. The ATR reactor can include a burner, a combustion chamber, and a catalyst bed included within a refractory lined pressure shell. In the ATR reactor, partial combustion of the hydrocarbon feedstock by sub-stoichiometric amounts of oxygen can be followed by steam reforming of the partially combusted hydrocarbon feedstock stream in a fixed bed of steam reforming catalyst. Steam reforming can also take place to some extent in the combustion chamber due to the high temperature such as temperatures from 700 °C to 1200 °C or higher. The steam reforming reaction can be accompanied by the water-gas shift reaction. Typically, the gas can be at or close to equilibrium at the outlet of the reactor with respect to steam reforming and water-gas shift reactions. The temperature of the exit gas can be in a range between approximately 850 °C and 1100 °C. ATR can use oxygen, steam, and, in some examples, carbon dioxide, in a reaction with a hydrocarbon feedstock stream to form syngas. The ratio of hydrogen to carbon monoxide in the exit gas can depend on selected operation conditions including an amount of steam and carbon dioxide added to the hydrocarbon feedstock stream or the ATR reactor.

The reforming section can include a pre-reformer, a steam methane reformer, an autothermal reformer, or any combination thereof. For reforming options, increasing an amount of carbon dioxide can decrease the hydrogen-to-carbon monoxide ratio in the product gas, but may also increase a size of the reactor due to the higher flow as well as increase a risk for forming carbon. In some examples, the reactor can receive an increase in steam to carbon flowrate.

Sorption enhanced water-gas shift (SEWGS) can be used in hydrogen production. The SEWGS process can be integrated into a hydrogen production process downstream from the reforming unit, in some cases regardless of the type of reforming process, which can convert the feedstock to a reformate, a mixture of hydrogen gas, carbon monoxide, carbon dioxide, methane, and the like. Additionally or alternatively, the SEWGS may be a substitute for the water-gas shift reactor or section, may be implemented downstream from the water-gas shift reactor to ensure conversion of the carbon monoxide and enhance thermal management in the SEWGS process, and the like. The hydrogen-gas-rich product of the SEWGS unit may include very low or negligible levels of carbon monoxide and carbon dioxide due to high levels of conversion of carbon monoxide, and adsorption of carbon dioxide, achieved in the process.

Integrating the SEWGS process downstream from a reforming unit can involve relatively low partial pressures for carbon dioxide or carbon monoxide in the syngas, which may include mostly hydrogen and steam. The low partial pressures of carbon dioxide and carbon monoxide may cause large volumes of adsorbent to be allocated for the SEWGS process to convert and capture the carbon dioxide and carbon monoxide in an efficient manner. The productivity of the adsorbent can correspond to partial pressure of carbon dioxide, and the amount of steam used for the regeneration can correspond to the carbon dioxide adsorption capacity of the material. The steam can be used to displace the adsorbed carbon dioxide during the regeneration step, and the larger the volume of adsorbent per unit of carbon dioxide isolated, the higher the steam consumption per unit of carbon dioxide isolated. The consumption of steam can reduce the efficiency of hydrogen production since high temperature steam can be generated, and the steam may be partially recovered from the hydrogen-rich-stream. The heat content of the steam that is desorbed in the regeneration step together with carbon dioxide may not be recovered by simple heat exchange due to absence of a cold sink at a dew point temperature below 100 °C.

Steam and carbon dioxide can adsorb competitively at higher partial pressures. For example, potential carbon dioxide adsorption sites can be blocked by water if water is present in the feedstock gas at a certain level, which can reduce the overall carbon dioxide adsorption capacity of the sorbent. High pressure steam or carbon dioxide can be used in the SEWGS unit to displace volume during the rinse step. The rinse can displace a residual volume of feedstock gas inside the vessel after the adsorption step is complete. Using carbon dioxide and high-pressure steam as rinse can cause increased power consumption, such as electrical power, for the compressing and circulating carbon dioxide. Rinsing with steam can affect a thermal energy efficiency, such that the same thermal energy could have been used to generate more hydrogen.

A hydrogen production system that integrates sorption enhanced water-gas shift (SEWGS) can be used to produce low-carbon hydrogen. The SEWGS step can provide an efficient manner to isolate carbon dioxide at lowest amounts of steam consumption. The hydrogen production system can include:
- a reforming reactor that can react a hydrocarbon feedstock to produce a reformer effluent that can include carbon monoxide and hydrogen;
- a water-gas shift reactor that can receive the reformer effluent and that can convert the carbon monoxide to carbon dioxide and hydrogen to produce a shift effluent;
- a system to increase a partial pressure of carbon monoxide and carbon dioxide in the shift effluent; and
- a sorption enhanced water-gas shift (SEWGS) reactor that can receive the shift effluent with an increased carbon monoxide and carbon dioxide partial pressure, compared to the partial pressure of carbon monoxide and carbon dioxide in the shift effluent output by the system, and to provide a carbon-dioxide-rich stream and a hydrogen-rich stream.

The term "reforming reactor" can refer to a synthesis gas (syngas) generation reactor, such as a steam methane reforming reactor, a pre-reforming reaction, a dry reforming reactor, an autothermal reforming reactor, or any suitable combination thereof. In some examples, the reforming reactor can be or include an ATR reactor. The ATR reactor can include a burner, a combustion chamber, and a bed of a first catalyst housed within a refractory lined pressure shell. In some examples, the reforming reactor can be or include a steam methane reforming reactor. The steam methane reforming reactor, which may be or include an electric steam methane reformer (SMR), can include a number of tubes that can house the first catalyst within a furnace with burners. Additionally or alternatively, a water-gas shift (WGS) reactor can be used to increase the hydrogen content or reduce the carbon monoxide content of the reformer effluent.

The WGS reaction can be at least mildly exothermic, and a favorable equilibrium can be obtained at low temperatures. Iron-containing catalysts can be used as high-temperature-shift (HTS) catalysts. HTS catalysts can be used in conjunction with medium and low temperature catalysts, which can include copper depending on the process requirements. The volume and choice of materials used can depend on a predefined limit for carbon monoxide in the product gas stream and also the impurities that may be present. The bed size can be governed by the foregoing limits and the life time, which can cause most HTS catalyst vessels to be relatively large.

The SEWGS system can include (i) a catalytic sorbent material that can promote the WGS reaction and adsorb carbon dioxide, which can form the hydrogen product stream, and (ii) a regenerating device, which may be or include an arrangement of valves, to regenerate the sorbent material to release the carbon dioxide product stream. The regenerating device can reduce SEWGS reactor pressure and can introduce steam in the SEWGS reactor.

In some examples, the hydrogen production system can include a heat recovery device that can recover heat from the carbon-dioxide-rich stream, the hydrogen-rich stream, or a combination thereof. Additionally or alternatively, the system to increase carbon monoxide and carbon dioxide partial pressure can be or include a hydrogen-selective membrane, a pressure swing adsorption unit (PSA), or a (condensing) heat exchanger, or any suitable combination thereof. The partial pressure of carbon monoxide and carbon dioxide can be increased by removing a portion of the steam. The system to increase carbon monoxide and carbon dioxide partial pressure can be or include a first hydrogen selective membrane that can receive the shift effluent and can produce a first hydrogen-enriched stream and an effluent with an increased carbon monoxide and carbon dioxide partial pressure. The hydrogen production system can include a first recycle device, which may be or include a pipeline, that can recycle the first hydrogen-enriched stream in the reforming reactor as fuel or in a downstream pre-heating section.

The system to increase carbon monoxide and carbon dioxide partial pressure can be or include a condensing heat exchanger that can receive the shift effluent and can produce a cooled, shift effluent with an increased carbon monoxide and carbon dioxide partial pressure and a condensate. The hydrogen production system can include a device that can separate the condensate from the shift effluent and can provide a dried shift effluent with increased carbon monoxide and carbon dioxide partial pressure. The system to increase the carbon monoxide and carbon dioxide partial pressure can be or include a first hydrogen pressure swing adsorption (PSA) unit that can receive the dried shift effluent and can produce a first hydrogen enriched stream and a PSA tail gas with increased carbon monoxide and carbon dioxide molar ratios compared to those of the received dried shift effluent. The hydrogen production system can include a PSA tail gas compressor that can provide a pressurized PSA tail gas.

The hydrogen production system can include a second device, which may be or include a pipeline, that can recycle dried shift effluent in the heat exchanger. The hydrogen production system can include a second hydrogen selective membrane that can receive the dried shift effluent and to produce a second hydrogen-enriched stream and a retentate stream. The hydrogen production system can include a third recycle device that can recycle the second hydrogen-enriched stream in the reforming reactor as fuel and the retentate stream in the heat exchanger.

The hydrogen production system can include a hydrogen separation unit that can receive the dried shift effluent and produce a third hydrogen-enriched stream and a purge gas stream. The hydrogen production system can include a compression device to compress the purge gas stream, and the hydrogen production system can include a fourth recycle device that can recycle the compressed purge gas stream in the heat exchanger. The hydrogen separation unit can be or include a pressure swing adsorption unit.

The hydrogen production system can include a desulfurization section that can remove sulfur compounds from hydrocarbon feed. The desulfurization section can include a hydrogenation reactor for saturating olefins. Additionally or alternatively, the desulfurization section can include a section based on zinc oxide adsorption. The desulfurization section can include a halogen removal adsorbent, a mercury removal unit, or a combination thereof.

A process that uses the foregoing hydrogen production system can be used to produce a carbon-dioxide-rich stream and a hydrogen-rich stream. The process can include a reforming step of a hydrocarbon feedstock with an oxidant gas stream to produce a reformer effluent that can include carbon monoxide and hydrogen. The process can include a water-gas shift reaction step to convert the carbon monoxide included in the reformer effluent to carbon dioxide and hydrogen to produce a shift effluent. The process can include a step to increase partial pressure of carbon monoxide and carbon dioxide in the shift effluent. The process can include a SEWGS reaction step to provide a carbon-dioxide-rich stream and a hydrogen-rich stream from the shift effluent with an increased carbon monoxide and carbon dioxide partial pressure.

In some examples, the carbon monoxide and carbon dioxide partial pressure can be increased by less than approximately 1% to approximately 31%. Additionally or alternatively, the carbon monoxide and carbon dioxide partial pressure may be increased by removing hydrogen. In some examples, the carbon-dioxide-rich stream and the hydrogen-rich stream can have a purity that may be from approximately 75% to approximately 100%.

In some examples, the process can include a heat recovery step to recover heat from the carbon-dioxide-rich stream, from the hydrogen-rich stream, or from a combination thereof. Additionally or alternatively, the process can include a hydrogen membrane separation step, a cooling step by heat exchange, or a combination thereof. The process can include a membrane separation step of the hydrogen coming from the shift effluent to produce a first hydrogen-enriched stream and a shift effluent with an increased carbon monoxide and carbon dioxide partial pressure. The process can include a first recycling step of the first hydrogen-enriched stream in the reforming reactor as fuel or in a downstream pre-heating section.

In some examples, the process can include a cooling step of the shift effluent by heat exchange to produce a cooled shift effluent with an increased carbon monoxide and carbon dioxide partial pressure and a steam-enriched shift effluent. The process can include a condensation step of steam included in the steam-enriched shift effluent to produce a dried shift effluent. Additionally or alternatively, the cooled shift effluent can have a temperature of from approximately 160 °C to approximately 100 °C. In some examples, the process can include a second recycling step of the dried shift effluent in the heat exchanger used for the cooling step by heat exchanger.

In some examples, the process can include a membrane separation step to produce a second hydrogen-enriched stream and a retentate stream from the dried shift effluent. The process can include a third recycling step of the second hydrogen-enriched stream in the reforming reactor as fuel and the retentate stream in the heat exchanger. The process can include a separation step to produce a third hydrogen-enriched stream and a purge stream from the dried shift effluent. Additionally or alternatively, the process can include a compression step of the purge stream, and the process can include a fourth recycling step of the compressed purge stream in the heat exchanger. In some examples, the process can include a desulfurization step of the hydrocarbon feedstock.

The SEWGS reaction step can include various sub-steps. For example, the SEWGS reaction step can include a reaction sub-step in which the shift effluent can be fed into a SEWGS reactor that includes a catalytic sorbent material that can adsorb carbon dioxide, thereby forming the hydrogen product stream and a sorbent material loaded with carbon dioxide. The SEWGS reaction step can additionally include a rinse sub-step in which steam can be fed into the SEWGS reactor to displace interstitial gasses out of the reactor vessel. Additionally or alternatively, the SEWGS reaction step can include a blowdown sub-step in which the pressure in the SEWGS reactor can be reduced to the regeneration pressure in the range of approximately 0 bar to approximately 5 bar, which can release at least part of the carbon dioxide from the loaded sorbent material to form the carbon dioxide product stream. The SEWGS reaction step can additionally include a purge sub-step in which steam is fed to the SEWGS reactor to release carbon dioxide molecules from the SEWGS adsorbent.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

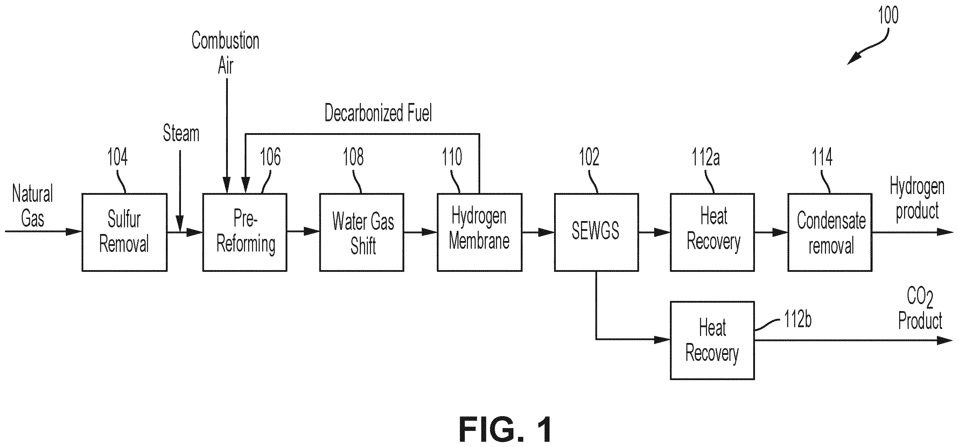

FIG. 1 is a block diagram of a hydrogen production system 100 that can be used to remove hydrogen upstream from a sorption enhanced water-gas shift (SEWGS) reactor 102 according to some examples of the present disclosure. The hydrogen production system 100 can include the SEWGS reactor 102, a sulfur removal device 104, a (pre-)reforming reactor 106, a WGS reactor 108, a hydrogen membrane 110, a first heat recovery device 112a, a second heat recovery device 112b, and a condensate removal device 114. In other examples, the hydrogen production system 100 can include any additional or alternative components. The sulfur removal device 104 can receive natural gas or other suitable inputs and can remove sulfur and sulfur-based compounds from the input. An output of the sulfur removal device 104 can be combined with steam and can be transmitted to the (pre-)reforming section 106, which can perform a (pre-)reforming reaction. The (pre-)reforming section 106 can additionally or alternatively receive combustion air, decarbonized fuel, and the like to perform the pre-reforming reaction. An output of the (pre-)reforming section 106 can be transmitted to the WGS reactor 108, which can perform a WGS reaction. An output of the WGS reactor 108 can be transmitted to the hydrogen membrane 110, which can control a flow of hydrogen and carbon-based material, such as carbon monoxide or carbon dioxide, to the SEWGS reactor 102. The SEWGS reactor 102 can split received input into a hydrogen rich stream and a carbon dioxide rich stream by adsorbing carbon dioxide from the input. The first heat recovery device 112a can recover heat from the hydrogen rich stream, and the second heat recovery device 112b can recover heat from the carbon dioxide rich stream. The condensate removal device 114 can remove condensates from the hydrogen rich stream to provide a highly pure hydrogen product, which may include hydrogen that is at least approximately 80% pure, that is at least approximately 85 % pure, that is at least approximately 90% pure, that is at least approximately 95% pure, that is at least approximately 97% pure, that is at least approximately 99% pure, etc.

In some examples, a high temperature hydrogen membrane can be used to decrease the hydrogen partial pressure of the wet reformate. The hydrogen separated by the membrane may be used as a fuel for the fired heated steam reformer or in the fired pre-heater in case of an autothermal reformer. The hydrogen lean wet reformate obtained from the membrane unit can be fed to the SEWGS reactor 102 to obtain a carbon-dioxide-rich product and a hydrogen-rich product. The carbon-dioxide-rich product and a hydrogen-rich product can be cooled by heat exchange to feed pre-heat, combustion air pre-heating, steam superheating, or steam generation or any suitable combination thereof.

Having part of the hydrogen removed from the syngas as decarbonized fuel can increase the partial pressure of carbon monoxide and carbon dioxide in the syngas, which can be beneficial for the SEWGS reactor 102 to reduce adsorbent volume requirements and to enhance conversion of carbon monoxide to hydrogen. Additionally or alternatively, a lower gas velocity on the SEWGS adsorbent bed can facilitate a lower pressure drop over the adsorbent bed material. In some examples, an absence of purification can be possible for obtaining a hydrogen-rich product that may serve as fuel in applications in which decarbonized fuels are used. Integrating the SEWGS reactor 102 into the hydrogen production system 100 can facilitate efficiently reclaiming the heat content related to the steam in heat recovery, for instance for the generation of low pressure steam, or pre-heating of feed and combustion air. The carbon dioxide product can be relatively dry, and the energy content of steam present in the carbon-dioxide-rich product may not lead to significant efficiency decrease.

The increased carbon monoxide and carbon dioxide pressure in the shift effluent can facilitate a reduced volume of adsorbent in the SEWGS reactor 102 and an enhanced productivity. The lower mass flow over the SEWGS reactor 102 can provide lower pressure drop and an enhanced productivity, for example with an increase of approximately 1% to approximately 20% in productivity. Additionally or alternatively, the lower rinse requirements with steam due to lower adsorbent volume can enhance the productivity of the hydrogen production system 100.

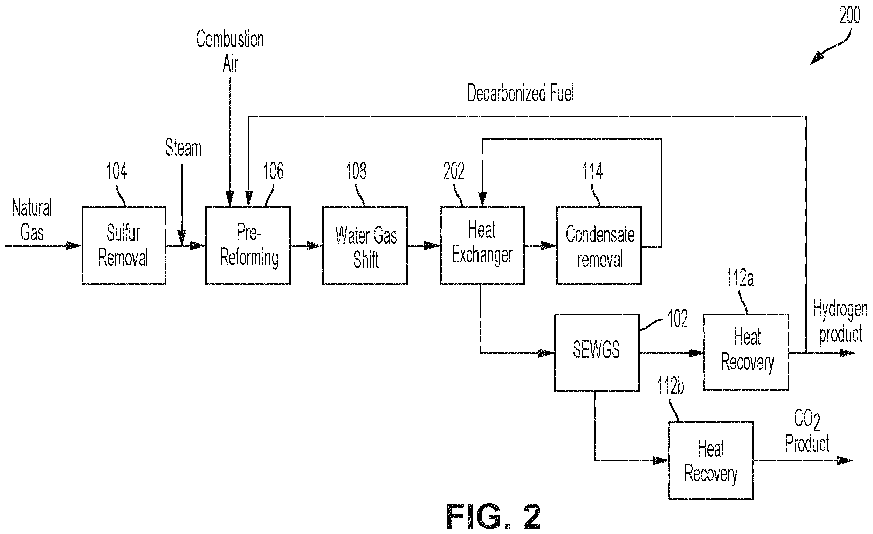

FIG. 2 is a block diagram of a hydrogen production system 200 that can be used to remove hydrogen downstream from a SEWGS reactor 102 and recover heat and condensate upstream from the SEWGS reactor 102 according to some examples of the present disclosure. As illustrated in FIG. 2, the hydrogen production system 200 can include the SEWGS reactor 102, a sulfur removal device 104, a (pre-)reforming section 106, a WGS reactor 108, a heat exchanger 202, a first heat recovery device 112a, a second heat recovery device 112b, and a condensate removal device 114. In other examples, the hydrogen production system 200 can include any additional or alternative components. The sulfur removal device 104 can receive natural gas or other suitable inputs and can remove sulfur and sulfur-based compounds from the input. An output of the sulfur removal device 104 can be combined with steam and can be transmitted to the (pre-)reforming section 106, which can perform the reforming reaction. The (pre-)reforming section 106 can additionally or alternatively receive combustion air, decarbonized fuel, and the like to generate the heat for the reforming reaction. An output of the pre-reforming reactor 106 can be transmitted to the WGS reactor 108, which can perform a WGS reaction. An output of the WGS reactor 108 can be transmitted to the heat exchanger 202 to recover at least a portion of heat of the output. The output, which may have been cooled, can be transmitted to the condensate removal device 114 to remove condensates prior to being recirculated to the heat exchanger 202. Additionally or alternatively, the output of the heat exchanger 202 can be transmitted to the SEWGS reactor 102, which can generate a hydrogen product stream and a carbon dioxide product stream. The first heat recovery device 112a can recover heat from the hydrogen stream, and the second heat recovery device 112b can recover heat from the carbon dioxide stream.

In some examples, the wet reformate produced by the reforming and optionally the WGS reactor can be cooled down to condense the steam to a desired level of steam in the partially dried reformate. The temperature at which the wet reformate is cooled can be fixed as a function of the partial pressure desired in the SEWGS reactor and also as a function of an amount of the heat content of the steam that may be recovered. The partially dried reformate can be re-heated, such as with heat exchange against the wet reformate, in an effort to minimize equipment needed. The cooled shift effluent with an increased carbon monoxide and carbon dioxide partial pressure can be fed to the SEWGS reactor 102 to obtain a carbon-dioxide-rich product stream and a hydrogen-rich product stream. The streams can be cooled via heat exchange to pre-heat feedstock, combustion air pre-heating, steam superheating, or steam generation or any combination thereof.

Lowering the partial pressure of steam in the input gas to the SEWGS reactor 102 can directly improve the adsorption capacity of the adsorbent since competitive adsorption can be avoided. Having part of the steam condensed from the reformate can also allow for maximizing heat recovery by reclaiming the latent heat of the excess process steam for pre-heating steps. The lower partial pressure of steam at the inlet of the SEWGS reactor 102 can increase partial pressure of carbon dioxide, which can decrease the adsorbent volume. The lower gas velocity on the SEWGS reactor adsorbent bed can be reduced, which can lead to a lower pressure drop over the adsorbent bed material.

Having a dry feed to the SEWGS reactor 102 can influence distribution of steam over the hydrogen-rich product stream and the carbon-dioxide-rich product stream. Due to the adsorption characteristics, the carbon dioxide product can be released at lower pressure levels. As a result of the low pressure, the dew point of the carbon dioxide rich gas can be at a temperature level where heat recovery may not be feasible. Much of the latent heat in the carbon dioxide rich stream can be lost since there may be no available heat sinks at the corresponding temperature. Instead, the heat can be removed from the process using air coolers or trim coolers. When the input to the SEWGS reactor 102 is relatively dry, a relatively dry carbon dioxide product can be generated. The drier the carbon dioxide product, the lower the potential amount of unrecoverable latent heat, which can increase a thermal efficiency of the hydrogen production system 200.

The hydrogen production system 200 can involve a lower partial pressure of steam in the feed to reduce competitive adsorption with carbon dioxide, which can increase an adsorption capacity. The hydrogen production system 200 can involve an increased partial pressure of carbon monoxide and carbon dioxide in the feed gas, which can increase the productivity of the adsorbent. The hydrogen production system 200 can involve a lower mass flow over the SEWGS reactor 102 since part of the steam is removed, which can lower the pressure drop over the SEWGS reactor 102. The hydrogen production system 200 can involve the SEWGS reactor 102 providing high purity hydrogen, which can be suitable for decarbonized fuel applications.

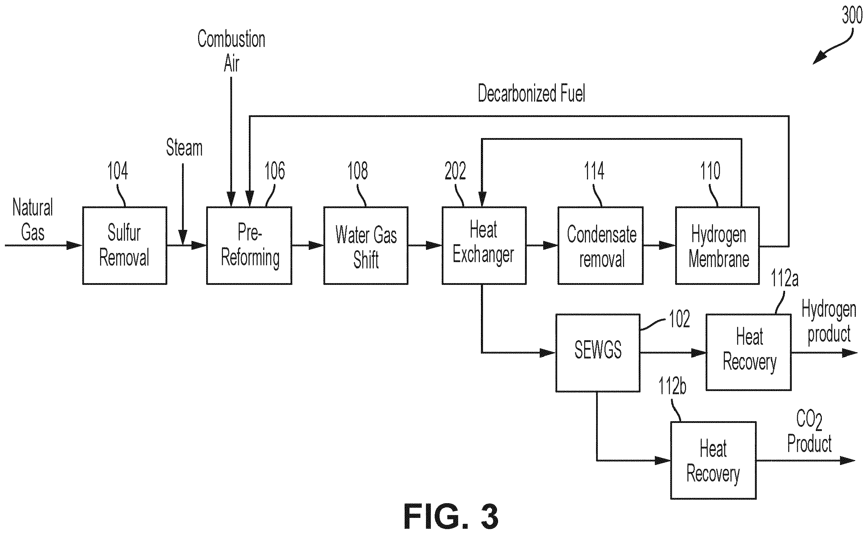

FIG. 3 is a block diagram of a hydrogen production system 300 that can be used to remove hydrogen and recover heat and hydrogen upstream from a SEWGS reactor 102 according to some examples of the present disclosure. As illustrated in FIG. 3, the hydrogen production system 300 can include the SEWGS reactor 102, a sulfur removal device 104, a (pre-)reforming reactor 106, a WGS reactor 108, a heat exchanger 202, a hydrogen membrane 110, a condensate removal device 114, a first heat recovery device 112a, and a second heat recovery device 112b. In other examples, the hydrogen production system 300 can include any additional or alternative components. The sulfur removal device 104 can receive natural gas or other suitable inputs and can remove sulfur and sulfur-based compounds from the input. An output of the sulfur removal device 104 can be combined with steam and can be transmitted to the pre-reforming reactor 106, which can perform a pre-reforming reaction. The pre-reforming reactor 106 can additionally or alternatively receive combustion air, decarbonized fuel, and the like to perform the pre-reforming reaction. An output of the pre-reforming reactor 106 can be transmitted to the WGS reactor 108, which can perform a WGS reaction. An output of the WGS reactor 108 can be transmitted to the heat exchanger 202 to recover at least a portion of heat of the output. The output, which may have been cooled, can be transmitted to the condensate removal device 114 to remove condensates and then to the hydrogen membrane 110 to control hydrogen flow prior to being recirculated to the heat exchanger 202. Additionally or alternatively, the output of the heat exchanger 202 can be transmitted to the SEWGS reactor 102, which can generate a hydrogen product stream and a carbon dioxide product stream. The first heat recovery device 112a can recover heat from the hydrogen stream, and the second heat recovery device 112b can recover heat from the carbon dioxide stream.

In some examples, the wet reformate produced by the reforming and optionally the WGS reactor can be further cooled down to condense the steam to a desired level of steam in the partially dried reformate. The temperature at which the wet reformate is cooled can be fixed as a function of the partial pressure desired in the SEWGS reactor 102 and also as a function of the heat content of steam that may be recovered. The at least partly dried reformate can be subjected to a hydrogen separation unit, such as the hydrogen membrane 110, to separate at least a first hydrogen rich stream as decarbonized fuel to be used in the reforming process. The at least partially dried and hydrogen lean reformate can be re-heated, such as with heat exchange against the wet reformate, to minimize equipment used. The re-heated at least partially dried and hydrogen lean reformate can be transmitted to the SEWGS reactor 102 to generate a carbon-dioxide-rich product stream and a hydrogen-rich product stream. The streams can be cooled using heat exchange to perform feed pre-heating, combustion air pre-heating, steam superheating, steam generation, or any combination thereof.

Having part of the hydrogen and part of the steam removed from the reformate can increase the partial pressure of carbon monoxide and carbon dioxide in the syngas, which can reduce adsorbent volume usage in the SEWGS reactor 102 and can enhance conversion of carbon monoxide to hydrogen. Additionally or alternatively, the lower gas velocity on the SEWGS adsorbent bed can lead to a lower pressure drop over the adsorbent bed material. The integration illustrated in FIG. 3 can facilitate reclaiming efficiently the heat content of the steam in heat recovery, for instance for the generation of low-pressure steam, pre-heating of feed and combustion air. Additionally or alternatively, reducing rinse steam requirements on the SEWGS reactor 102 can facilitate better utilization of high-level heat inside the hydrogen production system 300. High-level heat can be used as export steam or for the production of additional hydrogen without increasing the firing requirements of the reformer.

The hydrogen production system 300 can involve a lower partial pressure of steam in the feed to reduce competitive adsorption with carbon dioxide in the SEWGS reactor 102, which can increase adsorption capacity per unit of volume. The hydrogen production system 300 can involve an increased partial pressure of carbon monoxide and carbon dioxide in the feed gas, which can enhance productivity of the adsorbent. The hydrogen production system 300 can involve a lower mass flow over the SEWGS reactor 102 since part of the steam is removed, which can lower the pressure drop over the SEWGS reactor 102. The hydrogen production system 300 can involve the SEWGS reactor 102 generating high purity hydrogen, which can be suitable for decarbonized fuel applications. For higher purity export hydrogen using the SEWGS reactor 102, a size of the hydrogen purification unit can be reduced compared to other systems. The hydrogen production system 300 can involve a lower purge and rinse steam consumption to increase a thermal efficiency of the hydrogen production system 300.

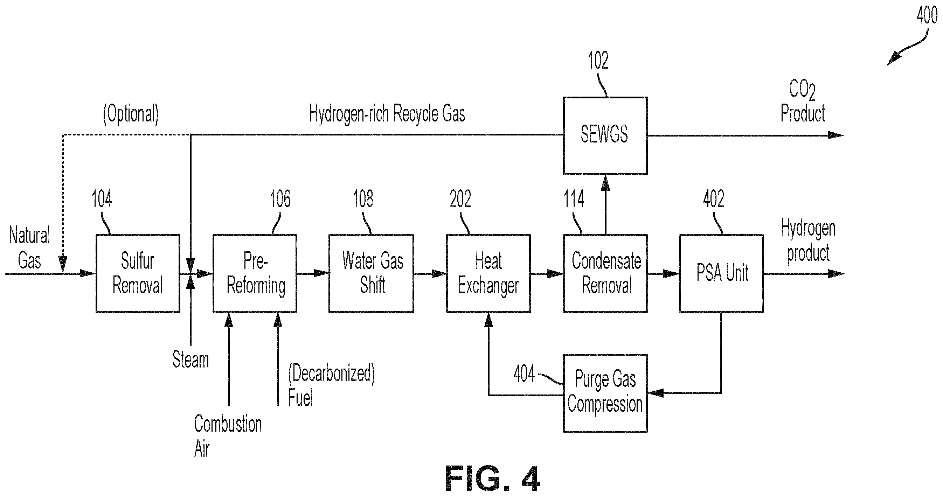

FIG. 4 is a block diagram of a hydrogen production system 400 that can include a SEWGS reactor 102 downstream from a pressure swing adsorption (PSA) unit 402 according to some examples of the present disclosure. As illustrated in FIG. 4, the hydrogen production system 400 can include the SEWGS reactor 102, a sulfur removal device 104, a (pre-)reforming reactor 106, a WGS reactor 108, a heat exchanger 202, a condensate removal device 114, the PSA unit 402, and a purge gas compressor 404. In other examples, the hydrogen production system 400 can include any additional or alternative components. The sulfur removal device 104 can receive natural gas or other suitable inputs and can remove sulfur and sulfur-based compounds from the input. An output of the sulfur removal device 104 can be combined with steam and can be transmitted to the (pre-)reforming reactor 106, which can perform a pre-reforming reaction. The pre-reforming reactor 106 can additionally or alternatively receive combustion air, decarbonized fuel, and the like to perform the pre-reforming reaction. An output of the (pre-)reforming reactor 106 can be transmitted to the WGS reactor 108, which can perform a WGS reaction. An output of the WGS reactor 108 can be transmitted to the heat exchanger 202 to recover at least a portion of heat of the output. The output, which may have been cooled, can be transmitted to the condensate removal device 114 to remove condensates and then to the PSA unit 402 to create a high purity hydrogen product and a CO2 rich purge gas stream. The purge gas stream of the PSA unit 402 can be transmitted to the purge gas compressor 404 for compression prior to transmitting the compressed gas back to the heat exchanger 202. Additionally or alternatively, an output of the heat exchanger 202 can be transmitted to the SEWGS reactor 102 to spilt the inputs into a hydrogen rich stream and a carbon dioxide product stream. The hydrogen rich stream can be recycled and transmitted to the sulfur removal device 104, to the pre-reforming reactor 106, or otherwise suitably within the hydrogen production system 400.

In some examples, the wet reformate produced by the reforming and optionally the WGS reactor can be cooled to condense the steam to a desired level of steam in the partially dried reformate. The temperature to which the wet reformate is cooled can be a function of the partial pressure desired in the SEWGS reactor 102 and also as a function of the amount of heat content of the steam that may be recovered. The at least partly dried reformate can be subjected to a hydrogen separation unit, such as the PSA unit 402, to separate at least a first hydrogen stream that can be the product of the hydrogen generation unit and at least one tail gas, or purge gas, that can include carbon dioxide, carbon monoxide, methane, and sacrificial hydrogen, or the like. The tail gas can be compressed and re-heated, such as with heat exchange against the wet reformate, to minimize equipment used. The re-heated tail gas can be transmitted to the SEWGS reactor 102 to generate a carbon-dioxide-rich product stream and a hydrogen-rich product stream. The carbon dioxide stream can be cooled using heat exchange for feed pre-heating, combustion air pre-heating, steam superheating, steam generation, or any combination thereof. The hydrogen-rich product stream can be used as a decarbonized fuel in the reforming process, can be recycled as feed gas to the pre-reforming reactor 106 to allow for low carbon emission of the hydrogen process, or a combination thereof.

The hydrogen production system 400 can perform high carbon capture at low energy cost. Power can be used for compression to reach a very low carbon footprint for generating hydrogen. Due to recycling at least a portion of the hydrogen-rich product stream, the hydrogen production system can have a high energy efficiency with a low primary hydrocarbon consumption compared to other systems. The sorbent can have enhanced productivity due to the high partial pressure of carbon dioxide and carbon monoxide in the tail gas, which can lead to low steam consumption in the SEWGS reactor 102 and compact adsorber columns.

The hydrogen production system 400 can involve enhanced increases of partial pressure of carbon monoxide and carbon dioxide. The hydrogen production system 400 can involve a reduced water content, compared to other systems, in the input to the SEWGS reactor 102. The hydrogen production system 400 can involve a low mass flow over the SEWGS reactor 102, which can lead to smaller pressure drops. The hydrogen production system 400 can involve heat of the hydrogen-rich product stream being used in the pre-reforming reactor 106. The hydrogen production system 400 can involve a potential for full carbon capture. The hydrogen production system 400 can involve hydrogen recycling via purge gas to eliminate a need for product hydrogen recycle.

The hydrogen production system 100, the hydrogen production system 200, the hydrogen production system 300, the hydrogen production system 400, or any combination thereof can be characterized by one or more of the following:
- Moisture content going to the SEWGS reactor 102 can be reduced, which can improve adsorbent productivity since co-adsorption of water can be reduced.
- Hydrogen content going to the SEWGS reactor 102 can be reduced, which can improve purity of the carbon-dioxide-rich product stream at equal rinse ratios or improve a capture efficiency of carbon dioxide at equal carbon dioxide product purity and lower rinse ratios.
- An improved adsorbent productivity can allow smaller reactor vessels to be used and to reduce plot space.
- Smaller reactor vessels can reduce rinse usage, which can lead to enhanced thermal performance of the system.
- A lower pressure drop on the SEWGS reactor 102 can reduce the inlet pressure to the hydrogen unit, which can enhance a reaction equilibrium and high pressure unit electrical power requirements, particularly if PSA tail gas is recycled.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

## Claims

1. A system comprising:
a reforming reactor coupled with a hydrocarbon feed source to receive a hydrocarbon feed and to react the hydrocarbon feed to produce a reformer effluent that includes carbon monoxide and hydrogen;
a water-gas shift (WGS) reactor coupled with the reforming reactor to receive the reformer effluent, at least a portion of the carbon monoxide being convertible by the WGS reactor to carbon dioxide and hydrogen and to produce a shift effluent;
a sub-system coupled with the WGS reactor to receive the shift effluent and to increase a partial pressure of carbon monoxide and carbon dioxide in the shift effluent; and
a sorption enhanced water-gas shift (SEWGS) reactor coupled with the sub-system to receive the shift effluent with increased partial pressure of carbon monoxide and carbon dioxide, and to provide, via a SEWGS reaction, a carbon-dioxide-rich product stream and a hydrogen-rich product stream; optionally, wherein the sub-system comprises a hydrogen selective membrane, a hydrogen pressure swing adsorption (PSA) device, a heat exchanger, or any combination thereof.

2. The system of claim 1, further comprising a heat recovery device coupled with the SEWGS reactor to recover heat from the carbon-dioxide-rich product stream or the hydrogen-rich product stream.

3. The system of claim 1, wherein the sub-system comprises a first hydrogen selective membrane to receive the shift effluent, wherein a first hydrogen-enriched stream and an adjusted shift effluent with the increased partial pressure of carbon monoxide and carbon dioxide is producible by the first hydrogen selective membrane, and wherein the system further comprises a first recycle device to recycle the first hydrogen-enriched stream in the reforming reactor as fuel.

4. The system of claim 1, wherein the sub-system is a condensing heat exchanger to receive the shift effluent, wherein (i) a cooled shift effluent with an increased partial pressure of carbon monoxide and carbon dioxide and (ii) a steam-condensate are producible by the heat exchanger, and wherein the system further comprises a condensate removal device to remove condensate for the shift effluent and to provide a dried shift effluent; optionally, further comprising a second recycle device to recycle the dried shift effluent in the heat exchanger.

5. The system of claim 1, wherein the sub-system is a first hydrogen PSA device to receive the dried shift effluent, wherein a first hydrogen enriched stream and a PSA tail gas are producible by the first hydrogen PSA device, and wherein the system further comprises a PSA tail gas compressor coupled with the first hydrogen PSA device to compress the PSA tail gas.

6. The system of claim 4, further comprising:
a second hydrogen selective membrane coupled with the condensate removal device to receive the dried shift effluent, wherein a second hydrogen-enriched stream and a retentate stream are producible by the second hydrogen selective membrane; and
a third recycle device coupled with the second hydrogen selective membrane to recycle the second hydrogen-enriched stream in the reforming reactor as fuel and the retentate stream in the heat exchanger.

7. The system of claim 4, further comprising:
a hydrogen separation unit coupled with the condensate removal device to receive the dried shift effluent, wherein a third hydrogen-enriched stream and a purge stream are producible by the hydrogen separation unit;
a compression device to compress the purge stream; and
a fourth recycle device to recycle the compressed purge stream in the heat exchanger.

8. A method comprising:
reforming a hydrocarbon feed with an oxidant gas stream to produce a reformer effluent that includes carbon monoxide and hydrogen, the reforming using a reforming reactor of a hydrogen production system;
converting the carbon monoxide to carbon dioxide and hydrogen in a water-gas shift reactor to produce a shift effluent, the converting using a water-gas shift (WGS) reactor of the hydrogen production system;
increasing a partial pressure of carbon monoxide and carbon dioxide in the shift effluent; and
generating a carbon-dioxide-rich product stream and a hydrogen-rich product stream, the generating using a sorption enhanced water-gas shift (SEWGS) reactor of the hydrogen production system and using the shift effluent; optionally, further comprising recovering heat from the carbon-dioxide-rich product stream or the hydrogen-rich product stream.

9. The method of claim 8, wherein increasing the partial pressure of carbon monoxide and carbon dioxide comprises using a hydrogen membrane or a heat exchanger to increase the partial pressure of carbon monoxide and carbon dioxide.

10. The method of claim 8, wherein increasing the partial pressure of carbon monoxide and carbon dioxide comprises separating hydrogen from the shift effluent using a hydrogen membrane to produce (i) a first hydrogen-enriched stream and (ii) a shift effluent with an increased partial pressure of carbon monoxide and carbon dioxide, wherein the method further comprises recycling the first hydrogen-enriched stream in a reforming reactor as fuel or in a downstream pre-heating section; or.

11. The method of claim 8, wherein increasing the partial pressure of carbon monoxide and carbon dioxide comprises cooling and condensing the shift effluent to produce (i) a cooled shift effluent with an increased partial pressure of carbon monoxide and carbon dioxide and (ii) a steam condensate, and wherein the method further comprises condensing steam included in the steam-enriched shift effluent to produce a dried shift effluent; optionally, further comprising recycling the dried shift effluent in the heat exchanger.

12. The method of claim 10, further comprising desulfurizing the hydrocarbon feed.

13. A system comprising:
a desulfurization device coupled with a hydrocarbon feed source to receive a hydrocarbon feed, sulfur removable from the hydrocarbon feed using the desulfurization device;
a reforming reactor coupled with the desulfurization device to receive the hydrocarbon feed from the desulfurization device and to react the hydrocarbon feed to produce a reformer effluent that includes carbon monoxide and hydrogen;
a water-gas shift (WGS) reactor coupled with the reforming reactor to receive the reformer effluent, at least a portion of the carbon monoxide convertible to carbon dioxide and hydrogen to produce a shift effluent;
a sub-system coupled with the WGS reactor to increase a partial pressure of carbon monoxide and carbon dioxide in the shift effluent; and
a sorption enhanced water-gas shift (SEWGS) reactor coupled with the sub-system to receive the shift effluent with increased partial pressure of carbon monoxide and carbon dioxide, a carbon-dioxide-rich product stream and a hydrogen-rich product stream producible by the SEWGS reactor via a SEWGS reaction; optionally, further comprising a heat recovery device coupled with the SEWGS reactor to recover heat from the carbon-dioxide-rich product stream or the hydrogen-rich product stream.

14. The system of claim 13, wherein the sub-system comprises a hydrogen selective membrane, a hydrogen pressure swing adsorption (PSA) device, a heat exchanger, or any combination thereof.

15. The system of claim 13, wherein the sub-system comprises a first hydrogen selective membrane coupled with the WGS reactor to receive the shift effluent, wherein a first hydrogen-enriched stream and a shift effluent with the increased partial pressure of carbon monoxide and carbon dioxide are producible by the first hydrogen selective membrane, and wherein the system further comprises a first recycle device to recycle the first hydrogen-enriched stream in the reforming reactor as fuel.
